# EUROPEAN PATENT SPECIFICATION

(11) **EP 3 109 525 B1**
(45) Date of publication and mention of the grant of the patent: **16.05.2018**
(21) Application number: 15173288.0
(22) Date of filing: 23.06.2015
(51) Int. Cl.: F16K 31/04, F16K 31/05

(54) **VALVE AND ACTUATOR ASSEMBLY**
VENTIL- UND AKTUATORANORDNUNG
ENSEMBLE SOUPAPE ET ACTIONNEUR

(43) Date of publication of application: 28.12.2016
(73) Proprietor: ESBE AB, 333 75 Reftele (SE)
(72) Inventor: KÅRHAMMER, Martin, 330 12 FORSHEDA (SE)
(74) Representative: Awapatent AB

(56) References cited:
- EP-A1- 1 672 261
- EP-A1- 2 017 512
- US-A- 5 564 461
- US-B1- 6 748 967

## Description

### Field of the Invention

The present invention relates to a valve and actuator assembly comprising a valve, a valve actuator and a connecting device, the connecting device comprising at least two male connecting members and at least two female connecting members and being configured for mounting of the actuator in at least two different positions relative to the valve.

### Background of the Invention

A valve and actuator assembly of this type may be used in combination with a fluid control valve in a domestic heating and/or cooling system.

EP 2 017 512 discloses a valve and actuator assembly. The valve is provided with a mounting plate which allows the actuator to be mounted in several different positions with respect to the valve, which provides for flexibility and variations in mounting of the valve actuator. However, in some situations it may result in that the actuator is assembled incorrectly.

### Summary of the Invention

It is an object of the present invention to overcome the above described drawback, and to provide an improved valve and actuator assembly.

This and other objects that will be apparent from the following summary and description are achieved by a valve and actuator assembly according to the appended claims.

According to one aspect of the present disclosure there is provided a valve and actuator assembly comprising a valve, a valve actuator and a connecting device, the connecting device comprising at least two male connecting members and at least two female connecting members and being configured for mounting of the valve actuator in at least two different positions relative to the valve, wherein the valve and actuator assembly further comprises a coding element on one of the valve or valve actuator, which is selectively presettable in at least two different coding element positions, and at least a first cavity on the other one of the valve or valve actuator, configured for receiving the coding element, wherein the valve and actuator assembly is configured for, when the coding element has been preset in one of said at least two coding element positions, mounting the valve actuator in one and only one position relative to the valve, which position corresponds to the preset coding element position.

The movable coding element is thus arranged to be selectively mounted in one of several, such as, e.g., two or four, different coding element positions, each of which coding element position defines a unique position of the valve actuator relative to the valve, i.e. to a unique valve and actuator configuration. When the coding element position has been preset, e.g. by placing a coding pin in a recess or hole, mounting of the actuator on the valve is possible in one single way. Hence, a valve and actuator assembly offering flexibility as regards different valve and actuator configurations may thus, by presetting the coding element, be configured to allow one and only one of the possible valve and actuator configurations.

Hence, once preset the coding element allows the actuator to be mounted in one single predetermined position relative to the valve, which provides for a foolproof connection of the actuator to the valve. A flexible valve and actuator assembly that enables to exclude the risk of incorrect mounting is provided. However, by changing the coding element position from a preset first coding element position to a second coding element position, i.e. by presetting the coding element in a second coding element position, the actuator may be mounted in an actuator position that corresponds to the second coding element position defining a unique valve and actuator configuration for the second coding element position.

Hence, a valve and actuator assembly that enables a high level of flexibility and variations in assembly and, at the same time, prevent incorrect mounting of the valve actuator is achieved.

Hence, flexibility as regards possible actuator positions is achieved without losing the possibility to prevent incorrect mounting of the valve actuator. This provides for a cost-efficient solution since the same actuator housing, e.g. in the form of a casted plastic housing, may be used several for different valve and actuator configurations.

According to one embodiment the coding element is a pin, which provides for a reliable and cost-efficient solution.

According to one embodiment said male connecting members are formed in a valve head, such as a plastic valve head, of the valve.

According to one embodiment said female connecting members are formed in the actuator housing.

According to one embodiment said first cavity is formed in the actuator housing.

According to one embodiment the valve and actuator assembly comprises a second cavity configured for receiving the coding element.

This embodiment has the advantage that further actuator positions are possible since at least four different valve and actuator configurations can be realized.

According to one embodiment the valve housing is made of plastic.

According to one embodiment the a portion of the valve is provided with at least two recesses, each of which is configured for receiving the coding element, for attachment of the coding element at one of a first and a second coding element position, respectively.

According to one embodiment a connecting interface, e.g. formed in a valve head, of the valve is provided with at least two recesses, each of which is configured for receiving the coding element, for selective attachment of the coding element in one of a first and a second coding element position.

It is a further object of the present disclosure to provide an improved method of connecting a valve control actuator to a fluid control valve. This object is achieved by means of a method of connecting a valve control actuator to a fluid control valve, wherein the valve and actuator comprises a connecting device, the connecting device comprising at least two male connecting members and at least two female connecting members and being configured for mounting of the actuator in at least two different positions relative to the valve, a coding element selectively presettable in at least two different coding element positions and at least a first coding element cavity configured for receiving the coding element, the method comprises placing the coding element in one of said at least two coding element positions, mounting the actuator such that the coding element is received in said first coding pin cavity.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows, in a perspective view, a valve and actuator assembly according to an embodiment of the present disclosure.
Fig. 2a illustrates the valve and actuator assembly shown in Fig. 1 in a first valve and actuator configuration.
Fig. 2b illustrates the valve and actuator assembly shown in Fig. 1 in a second valve and actuator configuration.
Fig. 2c illustrates the valve and actuator assembly shown in Fig. 1 in a third valve and actuator configuration.
Fig. 2d illustrates the valve and actuator assembly shown in Fig. 1 in a fourth valve and actuator configuration.

### Description of preferred embodiments

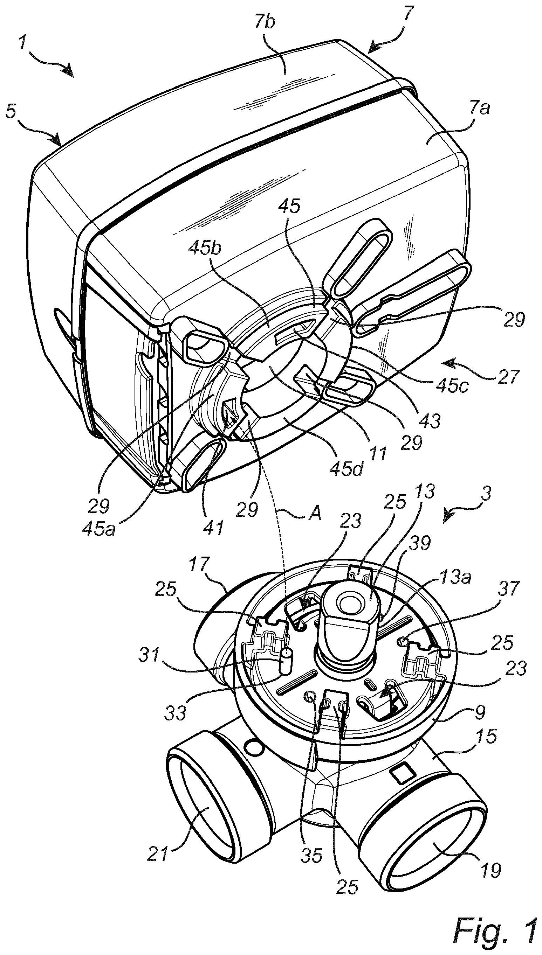

Fig. 1 shows a valve and actuator assembly 1 according to an embodiment of the present invention. The valve and actuator assembly 1 comprises a fluid control valve 3 and a valve control actuator 5.

The actuator 5 comprises a housing 7 with a rear part 7a and a front part 7b. The rear part 7a is configured to be mounted on a valve head 9 and has an opening 11 in which a shaft connector (not shown) for receiving a rotatable valve control shaft 13 of the fluid control valve 3 is arranged. The valve shaft connector comprises a connector shaft having an axial opening configured to receive a mating torque transmitting shaft end 13a of the valve control shaft 13.

The fluid control valve 3 comprises a valve housing 15 with three valve ports 17, 19, 21, the rotatable valve control shaft 13, a rotor (not shown) and the valve head 9 from which projects the valve control shaft 13. In this embodiment the valve head 9, which is also referred to as valve plate, is made by plastic. The plastic valve head 9 is form-fittingly secured against rotation to the valve housing 15 by means of a stopper device 23. The rotor, which is configured for controlling fluid flow through the valve 3, is secured to the valve control shaft 13 and rotatably seated in a valve chamber of the valve housing 15 in a known manner.

The plastic valve head 9 comprises four male connecting members, in the form of projecting studs 25, which are evenly spaced about the valve control shaft 13. Each of the projecting studs 25 has the same shape and is configured to be received in and co-operate, by engagement, with a connecting interface 27 of the rear part 7a of the actuator housing 7 and arranged to receive the projecting studs 25. The connecting interface 27 comprises four female connecting members, in the form of recesses 29 formed in the rear part 7a of the actuator housing 7. Each of the recesses 29 of the connecting interface 27 has the same shape and is configured for receiving a respective one of the projecting studs 25 of the valve head 9, thereby allowing the actuator 5 to be mounted in four different positions relative to the valve 3. The recesses 29 of the connecting interface 27 are arranged to, when the actuator 5 is mounted on the valve head 9, co-operate, by engagement, with the projecting studs 25 of the valve head 9 to prevent rotation of the actuator 5 relative to the valve 3.

The valve and actuator assembly 1 further comprises a movable coding element, in the form of a coding pin 31. The coding pin 31 is movable between four different coding pin positions, each of which corresponds to a unique actuator position. To this end the valve head 9 has four recesses 33, 35, 37, 39, each of which is configured for receiving the movable coding pin 31. Each of the four coding pin recesses 33, 35, 37, 39 is formed in the valve plate 9 and defines a respective coding pin position. By way of an example, in Fig. 1, the coding pin 31 is placed in a first one 33 of the four coding pin recesses 33, 35, 37, 39 of the valve plate 9, i.e. the coding pin 31 assumes a first one of the four possible coding pin positions defined by the coding pin recesses 33, 35, 37, 39.

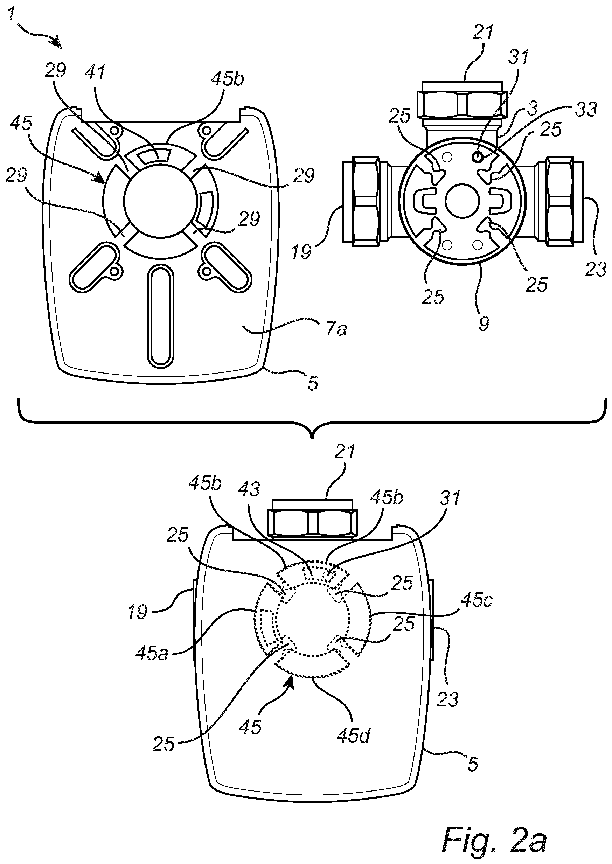

The coding pin 31 is thus selectively presettable in four different recesses 33, 35, 37, 39 and may thereby assume one of a first, second, third or fourth coding pin position, each of which corresponds to a unique actuator position, as will be described hereinafter with reference to Figs. 2a-d. Hence, the connecting interface 27, which comprises the four recesses 33, 35, 37, 39, enables the valve and actuator assembly 1 to be connected in four different valve and actuator configurations and thus provides for flexibility.

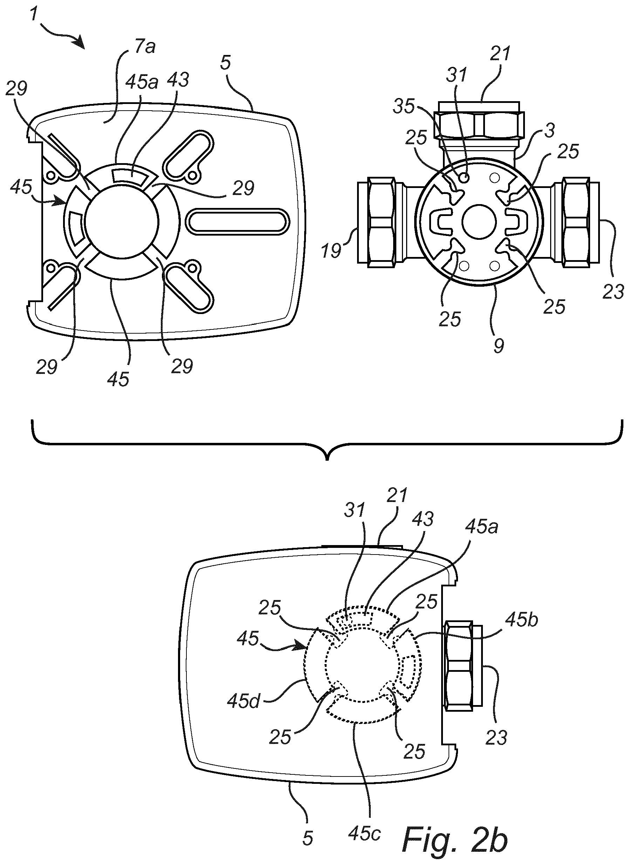

The rear part 7a of the actuator 5 has a first coding element cavity 41 configured for receiving the coding pin 31, as illustrated by arrow A in Fig. 1, when the coding pin 31 is situated in the first coding pin position, i.e. when the coding pin 31 is inserted in the first coding pin recess 33. The first cavity 41 is also configured for receiving the coding pin 31 when it is situated in the second coding pin position, illustrated in Fig. 2b.

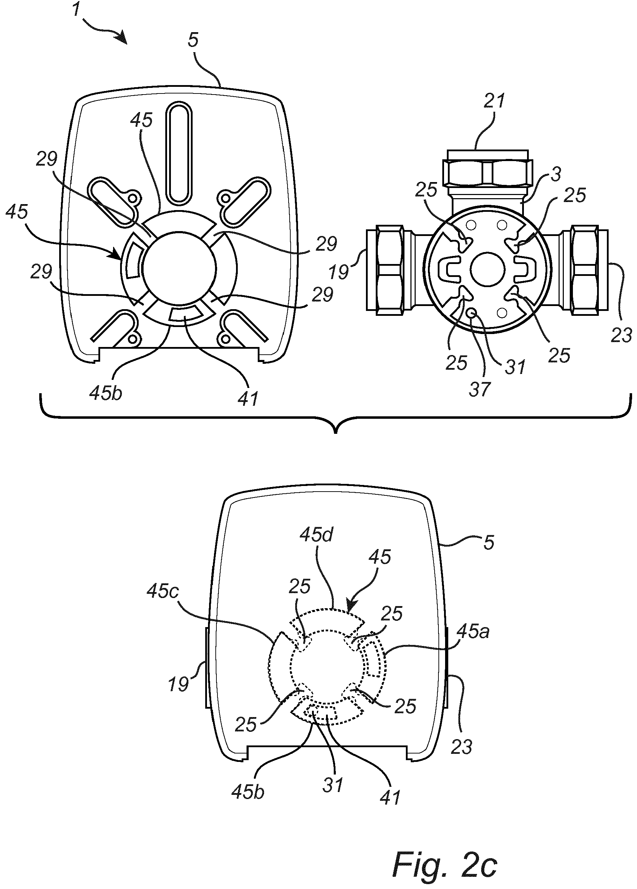

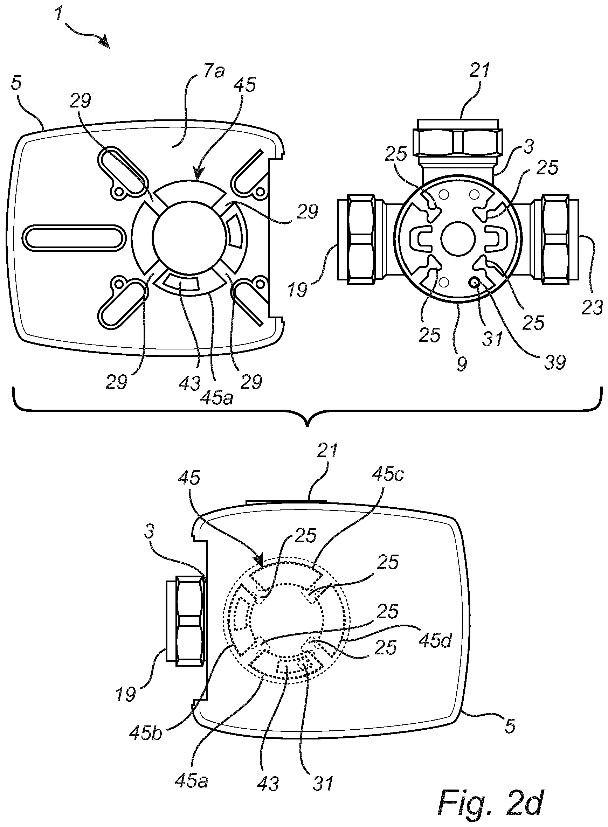

The rear part 7a of the actuator 5 has a second cavity 43 configured for receiving the coding pin 31 when it is situated in the third coding pin position, illustrated in Fig. 2c, and when it is situated in the fourth coding pin position, illustrated in Fig. 2d.

Each of the first and second cavities 41, 43 is formed in a ring-shaped protrusion 45, having four portions 45a, 45b, 45c, 45d, formed in the rear part 7a of the actuator housing 7.

The actuator housing 7 and the valve 3 are thus configured for, when the coding element 31 has been preset in one of the four coding element positions, i.e. inserted into one of the recesses 33, 35, 37, 39, mounting of the actuator 5 in one and only one position relative to the valve 3, which position corresponds to the preset coding element position. Other actuator positions are blocked by blocking portions of the protrusion 45 of the rear part 7a of the actuator housing 7. The connecting device 25, 27, 29, the ring-shaped protrusion 45 and the coding element 31 thus cooperates to allow one single valve and actuator configuration at a time. The original flexibility of the connecting interface 27 is thus limited to one single actuator position for each coding pin position by the coding pin 31 and blocking portions of the ring-shaped protrusion 45.

The valve control actuator 3 as such is preferably electrically operated and intended to be connected in known manner to, for example, a temperature sensor, which regulates, with the aid of the actuator, the setting and rotating position of the rotatable valve shaft 13.

With reference to Figs. 2a-d the four possible actuator configurations of the valve and actuator assembly 1 will be illustrated hereinafter.

Fig. 2a illustrates a first one of the four possible valve and actuator configurations of the valve and actuator assembly 1. The upper and lower part of Fig. 2a illustrates the valve and actuator assembly 1 in an unassembled state and in an assembled state, respectively.

To enable the first valve and actuator configuration the coding pin 31 is, prior to mounting, inserted in the first coding pin recess 33 of the valve head 9, as best illustrated in the upper right part of Fig. 2a, which illustrates the valve 3 in a top view. Then the coding pin 31 is preset to be received in the first coding pin cavity 41, illustrated in the upper left part of Fig. 2a, which illustrates the actuator 5 in a bottom view.

Upon mounting of the actuator 5 on the valve 3 the coding pin 31 is received in the first coding pin cavity 41 of the rear part 7a of the actuator housing 7.

When the actuator 5 is mounted on the valve 3 the projecting studs 25 is received in a respective one of the recesses 29 and the coding pin 31 is received in the second coding pin cavity 41, as illustrated in the lower part of Fig. 2a.

The ring-shaped protrusion 45 of the actuator housing 7 prevents the actuator 5 from being connected to the valve 3 in any other way by blocking the coding pin 31. With the coding pin 31 mounted in the first coding pin recess 33 this is thus the only possible way to connect the actuator 5 to the valve 3. By placing the movable coding pin 31 in the first recess 33 the second, third and fourth valve and actuator configurations are thus disabled. Hence, as long as the coding pin 31 is situated in the first coding pin recess 33 the ring-shaped protrusion 45 prevents, by blocking the movable pin 31, the actuator 7 from being mounted in any other way.

Fig. 2b illustrates a second one of the four possible valve and actuator configurations of the valve and actuator assembly 1. The upper and lower part of Fig. 2b illustrates the valve and actuator assembly 1 in an unassembled state and in an assembled state, respectively.

To enable the second valve and actuator configuration the coding pin 31 is, prior to mounting, inserted in the second coding pin recess 35 of the valve head 9, as best illustrated in the upper right part of Fig. 2a, which illustrates the valve 3 in a top view. Then the coding pin 31 is preset to be received in the second coding pin cavity 43, illustrated in the upper left part of Fig. 2a, which illustrates the actuator 5 in a bottom view.

Upon mounting of the actuator 5 on the valve 3 the coding pin 31 is received in the second coding pin cavity 43 of the rear part 7a of the actuator housing 7.

When the actuator 5 is mounted on the valve 3 the projecting studs 25 is received in a respective one of the recesses 29 and the coding pin 31 is received in the second coding pin cavity 43, as illustrated in the lower part of Fig. 2a.

The ring-shaped protrusion 45 of the actuator housing 7 prevents, by blocking the coding pin 31, the actuator 5 from being connected to the valve 3 in any other way. With the coding pin 31 mounted in the second coding pin recess 35 the second valve and actuator configuration is thus the only possible way to connect the actuator 5 to the valve 3. By placing the movable coding pin 31 in the second recess 35 the first, third and fourth valve and actuator configurations are thus disabled.

Fig. 2c illustrates a third one of the four possible valve and actuator configurations of the valve and actuator assembly 1. The upper and lower part of Fig. 2c illustrates the valve and actuator assembly 1 in an unassembled state and in an assembled state, respectively.

To enable the third valve and actuator configuration the coding pin 31 is, prior to mounting, inserted in the third coding pin recess 37 of the valve head 9, as best illustrated in the upper right part of Fig. 2c, which illustrates the valve 3 in a top view. Then the coding pin 31 is preset to be received in the first coding pin cavity 41, illustrated in the upper left part of Fig. 2c, which illustrates the actuator 5 in a bottom view.

Upon mounting of the actuator 5 on the valve 3 the coding pin 31 is received in the first coding pin cavity 41 of the rear part 7a of the actuator housing 7.

When the actuator 5 is mounted on the valve 3 the projecting studs 25 is received in a respective one of the recesses 29 and the coding pin 31 is received in the first coding pin cavity 41, as illustrated in the lower part of Fig. 2c.

The ring-shaped protrusion 45 of the actuator housing 7 prevents, by blocking the coding pin 31, the actuator 5 from being connected to the valve 3 in any other way. With the coding pin 31 mounted in the third coding pin recess 37 the third valve and actuator configuration is thus the only possible way to connect the actuator 5 to the valve 3. By placing the movable coding pin 31 in the third recess 37 the first, second and fourth valve and actuator configurations are thus disabled.

Fig. 2d illustrates a fourth one of the four possible valve and actuator configurations of the valve and actuator assembly 1. The upper and lower part of Fig. 2d illustrates the valve and actuator assembly 1 in an unassembled state and in an assembled state, respectively.

To enable the fourth valve and actuator configuration the coding pin 31 is, prior to mounting, inserted in the fourth coding pin recess 39 of the valve head 9, as best illustrated in the upper right part of Fig. 2d, which illustrates the valve 3 in a top view. Then the coding pin 31 is preset to be received in the second coding pin cavity 43, illustrated in the upper left part of Fig. 2d, which illustrates the actuator 5 in a bottom view.

Upon mounting of the actuator 5 on the valve 3 the coding pin 31 is received in the second coding pin cavity 43 of the rear part 7a of the actuator housing 7.

When the actuator 5 is mounted on the valve 3 the projecting studs 25 is received in a respective one of the recesses 29 and the coding pin 31 is received in the second coding pin cavity 43, as illustrated in the lower part of Fig. 2d.

The ring-shaped protrusion 45 of the actuator housing 7 prevents, by blocking the coding pin 31, the actuator 5 from being connected to the valve 3 in any other way. With the coding pin 31 mounted in the fourth coding pin recess 39 the fourth valve and actuator configuration is thus the only possible way to connect the actuator 5 to the valve 3. By placing the movable coding pin 31 in the fourth recess 39 the first, second and third valve and actuator configurations are thus disabled.

It will be appreciated that numerous variants of the embodiments described above are possible within the scope of the appended claims.

Hereinbefore, with reference to Fig. 1, and Figs. 2a-d, is has been described that the valve head is provided with male connecting members that mates with female connecting members of the rear part of the valve housing. It is appreciated that the rear part of the valve housing may be provided with male connecting members that mates with female connecting members of the valve head.

Hereinbefore, with reference to Fig. 1, and Figs. 2a-d, is has been described that the valve and actuator assembly comprises four male connecting members, in the form of projecting studs, and four female connecting members in the form of recesses. It is appreciated that the valve and actuator assembly may comprise only two male connecting members and only two female connecting members.

It is obvious that the layout of the fluid control valve 3 described above can be varied in different ways. For instance, the number of ports of a fluid control valve can be three, as described hereinbefore with reference to Fig. 1, or two or exceed the number of three.

## Claims

1. Valve and actuator assembly (1) comprising a valve (3), a valve actuator (5) and a connecting device (27, 29), the connecting device comprising at least two male connecting members (25) and at least two female connecting members (29) and being configured for mounting of the actuator (5) in at least two different positions relative to the valve (3), **characterized in that** the valve and actuator assembly (1) further comprises: a coding element (31) on one of the valve (3) or valve actuator (5), the position of which is selectively presettable in at least two different coding element positions, and at least a first cavity (41) on the other one of the valve (3) or valve actuator (5), configured for receiving the coding element (31), wherein the valve and actuator assembly (1) is configured for, when the coding element (31) has been preset in one of said at least two coding element positions, mounting of the valve actuator (5) in one and only one position relative to the valve (3), which position corresponds to the preset coding element position.

2. Valve and actuator assembly according to claim 1, wherein the coding element is a pin (31).

3. Valve and actuator assembly according to any of the preceding claims, wherein said male connecting members (25) are formed in a valve head (9) of the valve (3).

4. Valve and actuator assembly according to any of the preceding claims, wherein said female connecting members (29) are formed in the actuator housing (7).

5. Valve and actuator assembly according to any of the preceding claims, wherein said cavity is formed in the actuator housing (7, 7a).

6. Valve and actuator assembly according to any of the preceding claims, wherein the valve and actuator assembly (1) comprises a second cavity (43) configured for receiving the coding element (31).

7. Valve and actuator assembly according to any of the preceding claims, wherein the valve housing (7) is made of plastic.

8. Valve and actuator assembly according to any of the preceding claims, wherein the valve housing (7) is casted.

9. Valve and actuator assembly according to any of the preceding claims, wherein a connecting interface (27) of the valve (3) is provided with at least two recesses (33, 35, 37, 39), each of which is configured for receiving the coding element (31), for selective attachment of the coding element (31) in one of a first and a second coding element position.

10. Method of connecting a valve actuator (1) to a fluid control valve (3), wherein the valve and actuator comprises
a connecting device (27, 29), the connecting device comprising at least two male connecting members (25) and at least two female connecting members (29) and being configured for mounting of the actuator (5) in at least two different positions relative to the valve (3),
a coding element selectively presettable in at least two different coding element positions and
at least a first coding element cavity (41) configured for receiving the coding element (31), the method comprises:
placing the coding element in one of said at least two coding element positions,
mounting the actuator (5) such that the coding element (31) is received in said first coding element cavity (41).

## Patentansprüche

1. Ventil- und Aktuatoranordnung (1), die ein Ventil (3), einen Ventilaktuator (5) und eine Verbindungsvorrichtung (27, 29) umfasst, wobei die Verbindungsvorrichtung mindestens zwei Steckerverbindungselemente (25) und mindestens zwei Buchsensverbindungselemente (29) umfasst und zum Montieren des Aktuators (5) in mindestens zwei verschiedenen Positionen relativ zum Ventil (3) ausgelegt ist,
**dadurch gekennzeichnet, dass**
die Ventil- und Aktuatoranordnung (1) ferner Folgendes umfasst:
eine Codierkomponente (31) an einem des Ventils (3) oder des Ventilaktuators (5), deren Position in mindestens zwei verschiedene Codierkomponentenpositionen selektiv voreinstellbar ist, und
mindestens einen ersten Hohlraum (41) am anderen des Ventils (3) oder des Ventilaktuators (5), der zum Aufnehmen der Codierkomponente (31) ausgelegt ist, wobei die Ventil- und Aktuatoranordnung (1) dazu ausgelegt ist, wenn die Codierkomponente (31) in eine der mindestens zwei Codierkomponentenpositionen voreingestellt wurde, den Ventilaktuator (5) in einer und nur einer Position relativ zum Ventil (3) zu montieren, wobei die Position der voreingestellten Codierkomponentenposition entspricht.

2. Ventil- und Aktuatoranordnung nach Anspruch 1, wobei die Codierkomponente ein Stift (31) ist.

3. Ventil- und Aktuatoranordnung nach einem der vorhergehenden Ansprüche, wobei die Steckerverbindungselemente (25) in einem Ventilkopf (9) des Ventils (3) gebildet sind.

4. Ventil- und Aktuatoranordnung nach einem der vorhergehenden Ansprüche, wobei die Buchsensverbindungselemente (29) im Aktuatorgehäuse (7) gebildet sind.

5. Ventil- und Aktuatoranordnung nach einem der vorhergehenden Ansprüche, wobei der Hohlraum im Aktuatorgehäuse (7, 7a) gebildet ist.

6. Ventil- und Aktuatoranordnung nach einem der vorhergehenden Ansprüche, wobei die Ventil- und Aktuatoranordnung (1) einen zweiten Hohlraum (43) umfasst, der zum Aufnehmen der Codierkomponente (31) ausgelegt ist.

7. Ventil- und Aktuatoranordnung nach einem der vorhergehenden Ansprüche, wobei das Ventilgehäuse (7) aus Kunststoff besteht.

8. Ventil- und Aktuatoranordnung nach einem der vorhergehenden Ansprüche, wobei das Ventilgehäuse (7) gegossen ist.

9. Ventil- und Aktuatoranordnung nach einem der vorhergehenden Ansprüche, wobei eine Verbindungsschnittstelle (27) des Ventils (3) mit mindestens zwei Ausnehmungen (33, 35, 37, 39) versehen ist, von denen jede zum Aufnehmen der Codierkomponente (31) ausgelegt ist, um die Codierkomponente (31) in einer von einer ersten und einer zweiten Codierkomponentenposition selektiv zu befestigen.

10. Verfahren zum Verbinden eines Ventilaktuators (1) mit einem Fluidsteuerventil (3), wobei das Ventil und der Aktuator Folgendes umfasst
eine Verbindungsvorrichtung (27, 29), wobei die Verbindungsvorrichtung mindestens zwei Steckerverbindungselemente (25) und mindestens zwei Buchsensverbindungselemente (29) umfasst und zum Montieren des Aktuators (5) in mindestens zwei verschiedenen Positionen relativ zum Ventil (3) ausgelegt ist,
eine Codierkomponente (31), die in mindestens zwei verschiedene Codierkomponentenpositionen selektiv voreinstellbar ist, und
mindestens einen ersten Codierkomponentenhohlraum (41), der zum Aufnehmen der Codierkomponente (31) ausgelegt ist, wobei das Verfahren Folgendes umfasst:
Platzieren der Codierkomponente (31) in eine der mindestens zwei Codierkomponentenpositionen,
Montieren des Aktuators (5) derart, dass die Codierkomponente (31) im ersten Codierkomponentenhohlraum (41) aufgenommen wird.

## Revendications

1. Ensemble de soupape et d'actionneur (1) comprenant une soupape (3), un actionneur de soupape (5) et un dispositif de raccordement (27, 29), le dispositif de raccordement comprenant au moins deux éléments de raccordement mâles (25) et au moins deux éléments de raccordement femelles (29), tout en étant configuré pour le montage de l'actionneur (5) dans au moins deux positions différentes par rapport à la soupape (3),
**caractérisé en ce que**
l'ensemble de soupape et d'actionneur (1) comprend en outre :
un élément de codage (31) sur l'un parmi la soupape (3) et l'actionneur de soupape (5), dont la position peut être préréglée de manière sélective dans deux positions d'élément de codage différentes, et
au moins une première cavité (41) sur l'autre parmi la soupape (3) et l'actionneur de soupape (5), configurée pour recevoir l'élément de codage (31), l'ensemble de soupape et d'actionneur (1) étant configuré pour le montage de l'actionneur de soupape (5) dans une seule position par rapport à la soupape (3) lorsque l'élément de codage (31) a été préréglé dans l'une desdites au moins deux positions d'élément de codage, ladite position correspondant à la position d'élément de codage préréglée.

2. Ensemble de soupape et d'actionneur selon la revendication 1, dans lequel l'élément de codage est une broche (31).

3. Ensemble de soupape et d'actionneur (1) selon l'une quelconque des revendications précédentes, dans lequel lesdits éléments de raccordement mâles (25) sont formés dans une tête de soupape (9) de la soupape (3).

4. Ensemble de soupape et d'actionneur selon l'une quelconque des revendications précédentes, dans lequel lesdits éléments de raccordement femelles (29) sont formés dans le boîtier d'actionneur (7).

5. Ensemble de soupape et d'actionneur selon l'une quelconque des revendications précédentes, dans lequel ladite cavité est formée dans le boîtier d'actionneur de soupape (7, 7a).

6. Ensemble de soupape et d'actionneur selon l'une quelconque des revendications précédentes, dans lequel l'ensemble de soupape et d'actionneur (1) comprend une deuxième cavité (43) configurée pour recevoir l'élément de codage (31).

7. Ensemble de soupape et d'actionneur selon l'une quelconque des revendications précédentes, dans lequel le boîtier de soupape (7) est constitué de plastique.

8. Ensemble de soupape et d'actionneur selon l'une quelconque des revendications précédentes, dans lequel le boîtier de soupape (7) est coulé.

9. Ensemble de soupape et d'actionneur selon l'une quelconque des revendications précédentes, dans lequel une interface de raccordement (27) de la soupape (3) est pourvue d'au moins deux renfoncements (33, 35, 37, 39) pour la fixation sélective de l'élément de codage (31) dans l'une parmi une première et une deuxième positions d'élément de codage (31).

10. Procédé pour le raccordement d'un actionneur de soupape (1) à une soupape de régulation de fluide (3), dans lequel l'ensemble de soupape et d'actionneur comprend :
un dispositif de raccordement (27, 29), le dispositif de raccordement comprenant au moins deux éléments de raccordement mâles (25) et au moins deux éléments de raccordement femelles (29), tout en étant configuré pour le montage de l'actionneur (5) dans au moins deux positions différentes par rapport à la soupape (3),
un élément de codage (31) apte à être préréglé de manière sélective dans au moins deux positions d'élément de codage différentes, et
au moins une première cavité d'élément de codage (41) configurée pour recevoir l'élément de codage (31), le procédé comprenant :
la disposition de l'élément de codage (31) dans l'une parmi les au moins deux positions d'élément de codage,
le montage de l'actionneur de soupape (5) de manière à ce que l'élément de codage (31) soit reçu dans ladite première cavité d'élément de codage (41).
